# EUROPEAN PATENT SPECIFICATION

(11) **EP 3 388 318 B1**
(45) Date of publication and mention of the grant of the patent: **25.03.2020**
(21) Application number: 18167179.3
(22) Date of filing: 13.04.2018
(51) Int. Cl.: B62J 7/08, B62J 9/00, B62J 11/00

(54) **WINDING STORAGE DEVICE, PARTICULARLY FOR MOTORCYCLES**
WICKLUNGSSPEICHERVORRICHTUNG, INSBESONDERE FÜR MOTORRÄDER
DISPOSITIF DE STOCKAGE D'ENROULEMENT, EN PARTICULIER POUR MOTOCYCLETTES

(30) Priority: 14.04.2017 IT 201700041977
(43) Date of publication of application: 17.10.2018
(73) Proprietor: Italbrain S.r.l., 17100 Savona (IT)
(72) Inventor: PERILLO, Maurizio, I-16016 COGOLETO (Genova) (IT)
(74) Representative: Fioravanti, Corrado

(56) References cited:
- EP-A2- 1 431 167
- DE-C- 863 908
- JP-U- S5 755 682

## Description

### Technical field

The present invention refers, generally, to vehicle accessories; in particular, the invention relates to a storage device, to be used in particular on motorcycles.

### Prior Art

The need to provide a plurality of compartments for the transport of objects on a vehicle is known.

Satisfying such need becomes particularly problematic in the case of a motorcycle where it is difficult to obtain spaces to store objects, given the shape and size of the vehicle. In addition, it is particularly urgent the need to keep the driver's or passenger's helmet when in a parking state.

With reference to motorcycles, solutions such as saddle compartments, side bags and to boxes are contemplated in the prior art. However, the load capacity of these elements is limited by the need to store the helmet which, given its size, makes these spaces in fact useless.

The driver is therefore forced to sacrifice the load capacity of the storage box to store only the helmet or, alternatively, to tie the helmet to the anti-theft chain, which is usually secured to the wheel. In the latter case, however, the helmet generally remains on the ground, with negative effects in terms of wear (due to exposure to natural elements), and hygiene.

Moreover, the number of containers that can be associated with the vehicle (in particular, a motorcycle) and that are large enough to accommodate a motorcycle helmet, is naturally rather limited, and can give rise to problems when the helmets to be kept are more than one (for example in the case of the driver and a passenger).

Such limitations, understandably, jeopardize on one hand the availability of space in which to store objects in the vehicle and, on the other hand, the possibility of storing particularly bulky items, such as helmets, preserving them from atmospheric agents or other harmful

The prior art document JP357055682U shows a winding storage device suitable for being mounted on motorcycles, comprising winding belts being configured for winding and unwinding from a rotatable support, said rotatable support being connected to a holder configured to be connected to the motorcycle.

### Summary of the invention

A purpose of the present invention is to overcome the aforementioned problems.

To obtain this result, a storage device comprises a retractable sack or a bag wound on a roll. Where it is needed, it is possible to unroll the bag, to put inside it one or more objects (in particular, a motorcycle helmet).

The system is mountable to the motor vehicle and can be fixed under the saddle of the vehicle, incorporated in the top box, fixed to the luggage rack, attached to the front shield of a scooter etc.

The bag is preferably detachable by means of a release zip and can comprise an extraction socket which, once detached from the roller, can also constitute a handle for walking.

The bag is configurable so as to contain the helmet and protect it when the motor vehicle is parked. The storage device can also be equipped with a safety strap for anti-theft helmet-locking use.

The system can also provide an elastic strap for attachment to the frame, and/or may provide inflatable spaces for shock-proof purposes.

Furthermore, the bag can be made with one or more waterproof materials.

The above and other purposes and advantages are achieved, according to an aspect of the invention, by a winding storage device having the characteristics defined in claim 1. Preferred embodiments of the invention are defined in the dependent claims.

### Brief description of the drawings

The functional and structural characteristics of some preferred embodiments of a winding storage device according to the invention will now be described. Reference is made to the attached drawings, wherein:
- figures 1A to 1C are a schematic front view, a side section view and a front section view of a winding storage device, respectively, wherein the bag is retracted and wrapped around the rotating support, according to an embodiment of the invention;
- figure 2 is a schematic front view of the device of figure 1, wherein the bag is shown in the unrolled position;
- figures 3 to 6 are schematic views of a vehicle equipped with a storage device, according to some embodiments of the invention;
- figures 7A and 7B are two schematic perspective views of an accessory box for motorcycles, comprising a winding storage device according to an embodiment of the invention;
- figures 8A and 8B are two schematic side views of a top box for motorcycles, comprising a winding storage device according to a further embodiment of the invention;
- figures 9A to 10B are schematic views of a top box for motorcycles, associated with one or more storage devices, according to two embodiments of the invention; and
- figures 11A to 11G are schematic views of a top box equipped with a pair of storage devices, a possible mode of operation of which is shown, comprising the steps of opening the lid of the box, unwinding the bag over the edge of the lower half-shell, and close the top lid, causing the unrolled bag to hang outside the box.

### Detailed description

Before explaining in detail a plurality of embodiments of the invention, it should be clarified that the invention is not limited in its application to the constructional details and to the configuration of the components disclosed in the following description or illustrated in the drawings. The invention may assume other embodiments and be implemented or achieved in essentially different ways. It should also be understood that the phraseology and terminology are for descriptive purposes and should not be construed as limiting.

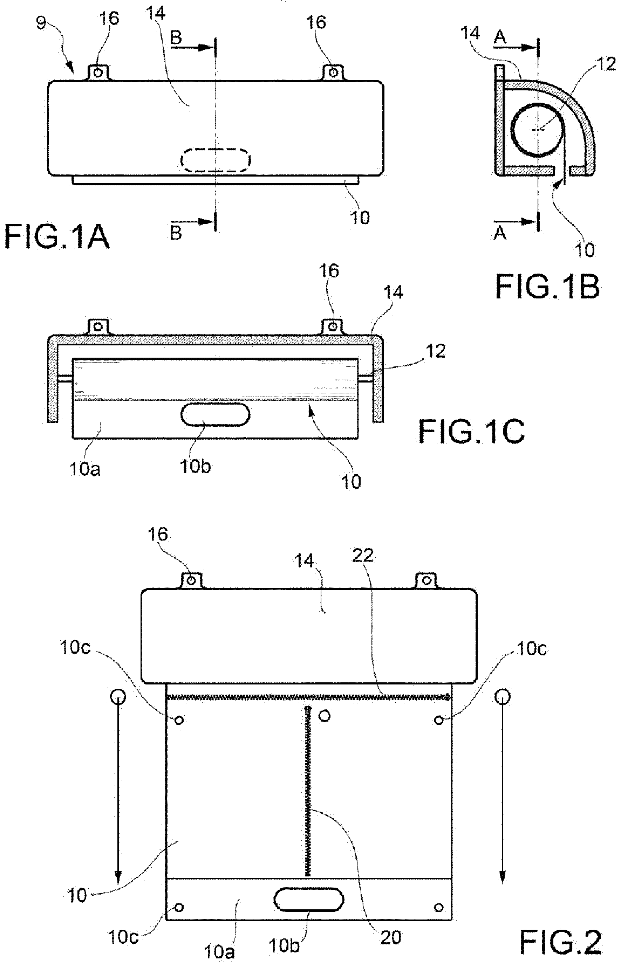

With reference initially to figures 1A to 1C, a winding storage device 9 for application on vehicles, especially motorcycles, includes a bag or sack 10 for carrying objects. The bag 10 is winding and unwinding from a rotatable support 12, which in turn is connected to a holder 14 configured to be connected to the vehicle. According to an embodiment, the rotatable support 12 is motorized.

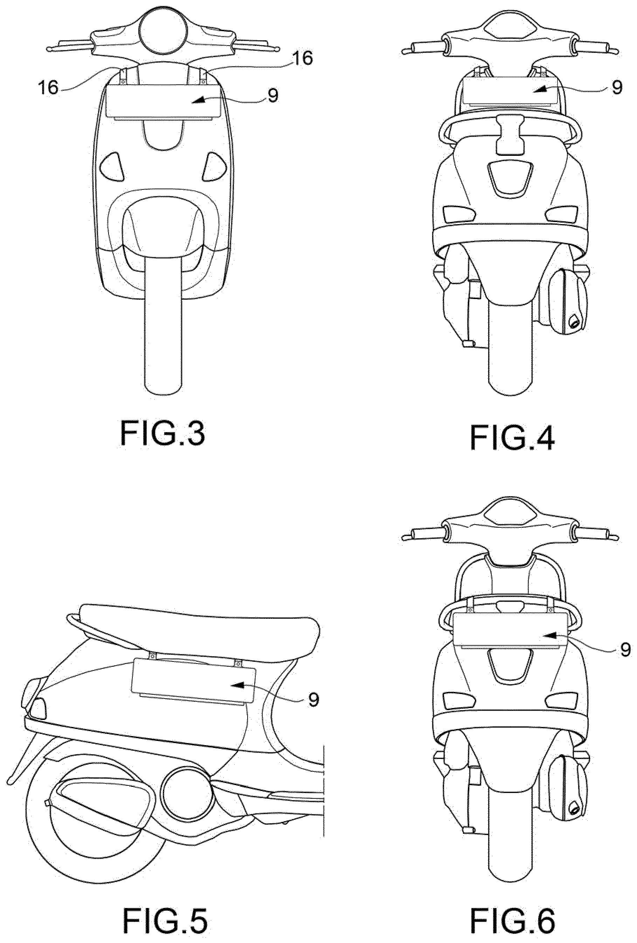

According to an embodiment, the holder 14 of the rotating support 12 can be connected to a part of the vehicle by means of hooking and/or retaining elements 16. For example, the holder 14 can be secured by means of hooks or grapples to the front shield of a motorcycle, as schematically shown in figures 3 and 4. The part of the motorcycle to which the storage device 9 can be connected can be a structural component of the vehicle (for example, the frame), or other elements that can be connected to the vehicle (such as, for example, a luggage rack, a side storage bag or a top box 18). The connection can be of a stable type (for example, by screws or other means of retention) or releasable (by means of, for example, hooks or interlocking mechanisms, so that the connection is reversible and the storage device 9 can be unhooked from the vehicle).

Alternatively, the holder 14 can be configured to be integral with a part of the vehicle (which part, similarly to what has been said above, can be a structural component, a luggage rack, a side box, a top box 18, etc.). The integrality between the storage device 9 and the part of the vehicle can be achieved, for example, by welding or gluing the holder 14 to that part of the vehicle, or by forming the holder 14 and the part of the vehicle as a single piece.

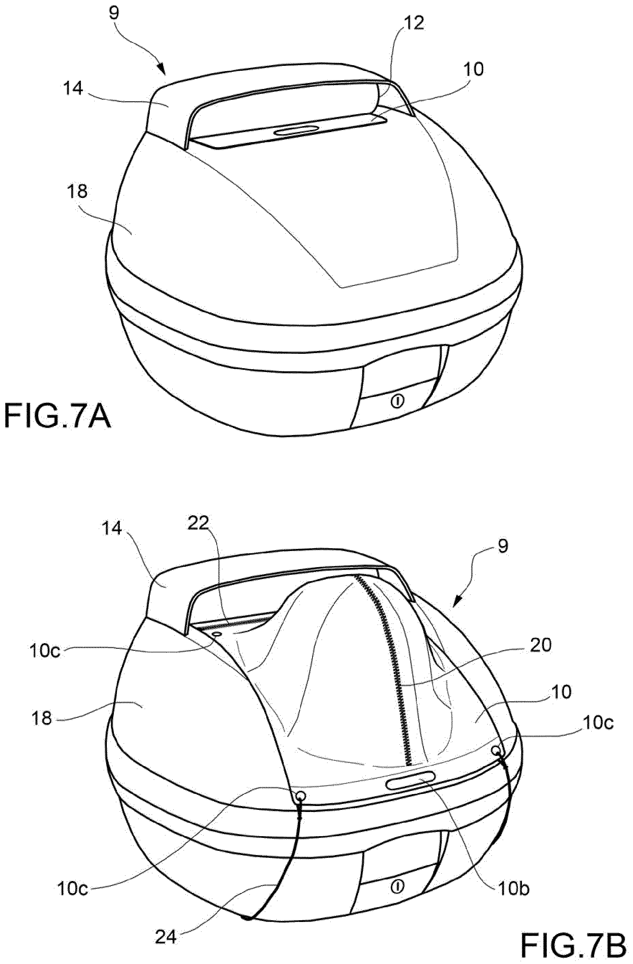

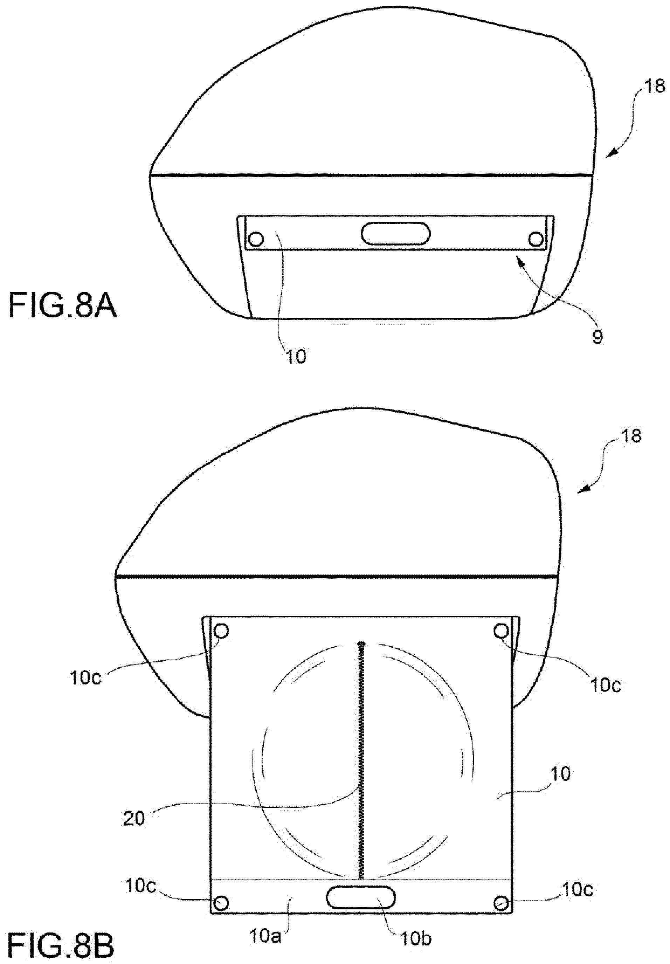

According to an embodiment, the holder 14 is an integral portion of a top box 18, which can be mounted on a motorcycle. By way of example, the winding storage device 9 can be positioned on the upper part of the box 18 (figures 7A and 7B), or on one or both sides thereof (figures 8A and 8B).

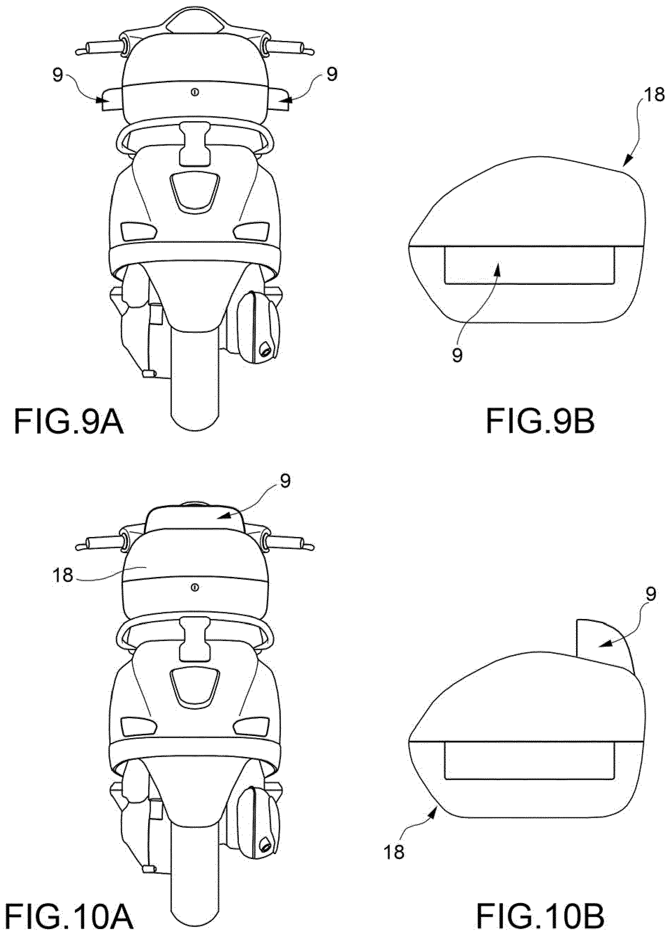

With reference to the configuration in which the storage device 9 is connected to the top box 18, figures 9A to 10B illustrate by way of example a condition in which the device 9 protrudes from both sides from the top box 18 and the upper half-shell, respectively. It shall be understood that the device 9 can be joined to the top box 18 according to all the previously described modes, i.e. by means of a fixed or removable connection, one-piece manufacturing, etc.

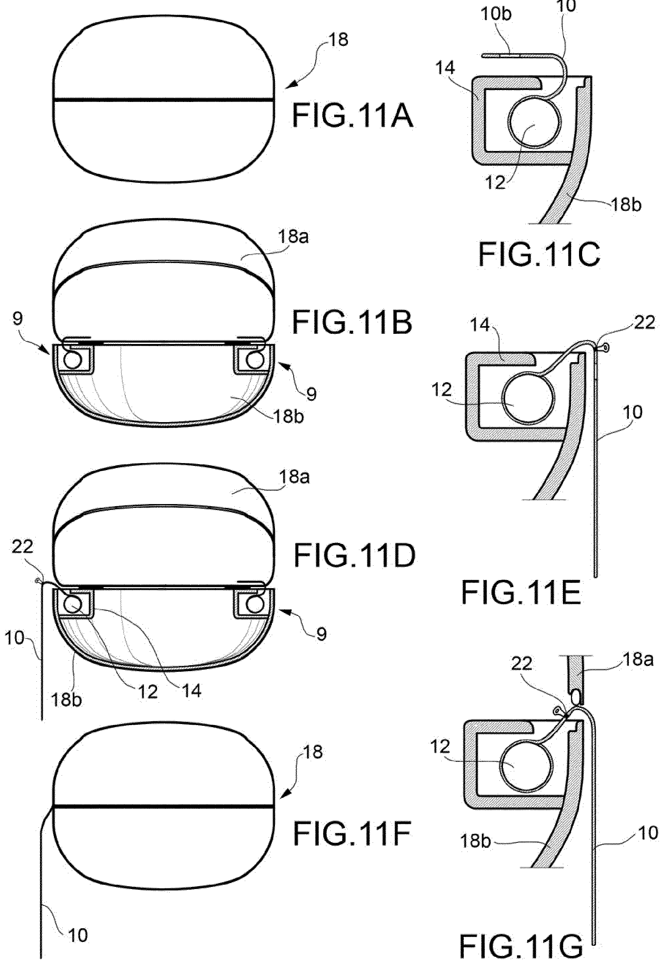

Furthermore, the top box 18 can be configured to contain one or more devices 9 within it. For example, the rotatable support 12 can be mounted on an inner side wall of one of the two half-shells forming the box 18. Conveniently, the bag 10 can be unwound from the rotatable support 12, and turned over the edge of the half-shell, so as to hang out of the box 18. According to an embodiment, illustrated by way of example in figures 11A to 11G, the box 18 comprises an upper half-shell or lid 18a, hinged to a lower half-shell 18b, to which two devices with a winding bag 9 are secured. Conveniently, the bags 10 are initially wound around the respective rollers 12, so that an end portion protrudes from the holder 14, thereby a user can easily grasp and pull the bag 10. This latter is unwound over the edge of the lower half-shell 18b (as visible for example in figures 11D and 11E), and conveniently the lid 18a is closed, clamping the bag 10 between the edge of the lid 18a and the edge of the lower half-shell 18b. Once the lid 18a has been closed, the bag 10 may be left to hang outside the box 18. It is understood that the one or more devices 9 can be connected to the lid 18a alternatively, or in combination, to the connection of one or more devices 9 to the lower half-shell 18b.

Similarly, it is possible to arrange one or more winding devices 9 inside the saddlebag compartment, so that, once unrolled, the bag 10 can hang beyond the edge of the saddlebag compartment, being conveniently clampable between the seat and the vehicle frame. According to an embodiment not illustrated, the configurations described with reference to the top box 18, or to the saddlebag compartment, are applicable to the case in which one or more devices 9 are placed inside a lateral bag for motorcycles, of a known type.

Optionally, the bag 10 can comprise a zip 20, which can be opened so as to make the inside of the bag 10 accessible for storing one or more objects. Instead of the zip, any other means may be present in order to make the inside of the bag 10 accessible, and subsequently close it again.

Conveniently, in a portion of the pocket 10 distal from the rotating support 12, a semi-rigid band 10a and/or a gripping element 10b may be present (in the form, for example, of a slot in which the user can insert the fingers, or a handle), to easily grab the bag 10 and unwind it from the rotating support 12.

According to an embodiment, one or more release means 22 are located in a portion of the bag 10 proximal to the rotatable support 12. These means are adapted for reversibly separating the bag 10 from the rotating support 12. In this way, the user can take the bag 10 with it, and reconnect it to the device 9 as required. Conveniently, the release means 22 can be configured as a zip running for the entire width of the bag 10 (as, for example, in figure 2), to secure and easily disengage the bag 10 to/from the rotating support 12. For example, by means of the gripping means 10b, the bag 10 removed from the rotating support 12 can be transported as an easy bag.

Hooking portions 10c may also be present on the bag 10, conveniently in the form of eyelets, to which cables or tapes 24 are conveniently hooked, to firmly secure the bag 10 to the vehicle (for example, by tying the deployed bag to the box 18, as in figure 7B), and/or allowing it to be carried on the shoulder or like a sutchel by the user (according to an embodiment not shown).

On the bag 10 there may be a further eyelet, for the passage of an anti-theft chain, or other safety device.

Preferably, the bag 10 is configured to accommodate a motorcycle helmet.

With a storage device according to the invention, it is advantageously provided a simple, economic and easy to apply tool for transporting and storing a plurality of objects in a vehicle, in particular a motorcycle. Above all, the invention allows a user to conveniently store and protect a motorcycle helmet.

Various aspects and embodiments of a winding storage device according to the invention have been described. It is understood that each embodiment may be combined with any other embodiment. The invention, moreover, is not limited to the described embodiments, but may be varied within the scope defined by the appended claims.

## Claims

1. Winding storage device (9) suitable for being mounted on motorcycles, comprising a bag (10) adapted to carry objects, the bag (10) being configured for winding and unwinding from a rotatable support (12), said rotatable support (12) being connected to a holder (14) configured to be connected to the motorcycle.

2. A device according to claim 1, wherein the holder (14) of the rotatable support (12) is removably connectable to a part of the motorcycle by means of hooking and/or retaining elements (16).

3. A device according to claim 2, wherein the holder (14) is removably connectable to the motorcycle frame.

4. A device according to claim 2, wherein the holder (14) is removably connectable to a motorcycle top box (18), connectable to the motorcycle.

5. A device according to claim 1, wherein the holder (14) is configured so as to be integral with a part of the motorcycle.

6. A device according to claim 5, wherein the holder (14) is an integral portion of a motorcycle top box (18).

7. A device according to any one of the preceding claims, wherein the bag (10) comprises a zip (20), openable so as to make the inside of the bag (10) accessible for storing one or more objects.

8. A device according to any one of the preceding claims, comprising one or more uncoupling means (22), arranged in a portion of the bag (10) proximal to the rotatable support (12), and adapted to separate reversibly the bag (10) from the rotatable support (12).

9. A device according to any one of the preceding claims, wherein the bag (10) is configured so as to accommodate a motorcycle helmet.

10. Motorcycle top box (18) for motorcycles, comprising a storage device (9) according to any one of the preceding claims.

## Patentansprüche

1. Aufwickel-Aufbewahrungsvorrichtung (9), die zum Anbringen an Motorrädern geeignet ist, aufweisend eine zum Transportieren von Gegenständen geeignete Tasche (10), wobei die Tasche (10) zum Auf- und Abwickeln von einem drehbaren Träger (12) ausgelegt ist, wobei der drehbare Träger (12) mit einer Halterung (14) verbunden ist, die zur Verbindung mit dem Motorrad ausgelegt ist.

2. Vorrichtung nach Anspruch 1, wobei die Halterung (14) des drehbaren Trägers (12) mittels Einhak- und/oder Halteelementen (16) abnehmbar mit einem Teil des Motorrads verbindbar ist.

3. Vorrichtung nach Anspruch 2, wobei die Halterung (14) abnehmbar mit dem Motorradrahmen verbindbar ist.

4. Vorrichtung nach Anspruch 2, wobei die Halterung (14) abnehmbar mit einem mit dem Motorrad verbindbaren Motorrad-Top-Case (18) verbindbar ist.

5. Vorrichtung nach Anspruch 1, wobei die Halterung (14) so ausgelegt ist, dass sie mit einem Teil des Motorrads einstückig ausgebildet ist.

6. Vorrichtung nach Anspruch 5, wobei die Halterung (14) ein integraler Bestandteil eines Motorrad-Top-Case (18) ist.

7. Vorrichtung nach einem der vorangehenden Ansprüche, wobei die Tasche (10) einen Reißverschluss (20) aufweist, der geöffnet werden kann, so dass das Innere der Tasche (10) zur Aufbewahrung eines oder mehrerer Gegenstände zugänglich ist.

8. Vorrichtung nach einem der vorangehenden Ansprüche, aufweisend eine oder mehrere Kopplungsvorrichtungen (22), die in einem dem drehbaren Träger (12) benachbarten Abschnitt der Tasche (10) angeordnet sind und die dazu ausgelegt sind, die Tasche (10) reversibel von dem drehbaren Träger (12) zu trennen.

9. Vorrichtung nach einem der vorangehenden Ansprüche, wobei die Tasche (10) zur Aufnahme eines Motorradhelms ausgelegt ist.

10. Motorrad-Top-Case (18) für Motorräder, aufweisend eine Aufbewahrungsvorrichtung (9) nach einem der vorangehenden Ansprüche.

## Revendications

1. Dispositif de rangement enroulable (9) approprié pour être monté sur des motocyclettes, comprenant un sac (10) adapté pour porter des objets, le sac (10) étant configuré pour un enroulement et un déroulement à partir d'un support rotatif (12), ledit support rotatif (12) étant raccordé à un portoir (14) configuré pour être raccordé à la motocyclette.

2. Dispositif selon la revendication 1, dans lequel le portoir (14) du support rotatif (12) peut être raccordé de manière amovible à une partie de la motocyclette au moyen d'éléments d'accrochage et/ou de retenue (16).

3. Dispositif selon la revendication 2, dans lequel le portoir (14) peut être raccordé de manière amovible au châssis de motocyclette.

4. Dispositif selon la revendication 2, dans lequel le portoir (14) peut être raccordé de manière amovible à un coffre supérieur de motocyclette (18), pouvant être raccordé à la motocyclette.

5. Dispositif selon la revendication 1, dans lequel le portoir (14) est configuré de façon à être solidaire d'une partie de la motocyclette.

6. Dispositif selon la revendication 5, dans lequel le portoir (14) est une partie solidaire d'un coffre supérieur de motocyclette (18).

7. Dispositif selon l'une quelconque des revendications précédentes, dans lequel le sac (10) comprend une fermeture éclair (20), pouvant être ouverte de façon à rendre l'intérieur du sac (10) accessible pour le stockage d'un ou plusieurs objets.

8. Dispositif selon l'une quelconque des revendications précédentes, comprenant un ou plusieurs moyens de découplage (22), agencés dans une portion du sac (10) proximale au support rotatif (12), et adaptés pour séparer de manière réversible le sac (10) du support rotatif (12).

9. Dispositif selon l'une quelconque des revendications précédentes, dans lequel le sac (10) est configuré de façon à loger un casque de motocyclette.

10. Coffre supérieur de motocyclette (18) pour des motocyclettes, comprenant un dispositif de rangement (9) selon l'une quelconque des revendications précédentes.
